# FASCICULE DE BREVET EUROPEEN

(11) **EP 1 209 029 B1**
(45) Date de publication et mention de la délivrance du brevet: **08.09.2010**
(21) Numéro de dépôt: 01402980.5
(22) Date de dépôt: 21.11.2001
(51) Int. Cl.: B60Q 1/14

(54) **Ensemble de commutation sur colonne de direction pour véhicule**
Lenkstockschaltereinrichtung für Kraftfahrzeuge
Vehicle steering column switching unit

(30) Priorité: 22.11.2000 FR 0015068
(43) Date de publication de la demande: 29.05.2002
(73) Titulaire: Valeo Interior Controls, 94046 Créteil Cedex (FR)
(72) Inventeur: Lagier, Daniel, 92000 Nanterre (FR); Letoumelin, Rémi, 77400 Lagny-sur-Marne (FR)
(74) Mandataire: Barbin le Bourhis, Joël

(56) Documents cités:
- EP-A- 0 629 526
- DE-A- 19 706 546
- DE-C- 19 722 780
- DE-C- 19 723 482
- DE-C- 19 740 526
- FR-A- 2 731 552
- US-A- 5 724 719

## Description

La présente invention concerne une manette de commutateur pour ensemble de commutation de haut de colonne de direction d'un véhicule automobile.

Un tel ensemble de commutation est bien connu : il est fixé à la colonne de direction et comporte, par exemple, le commutateur d'éclairage et de signalisation et le commutateur de commande d'essuie-vitre et de lave-vitre. L'ensemble de commutation assure la liaison de ces commutateurs par exemple au bus de multiplexage du véhicule. De tels ensembles sont connus des documents DE-C-197 22 780 et DE-A-197 06 546.

Ces commutateurs comprennent généralement un boîtier fermé sur une de ses faces par une platine de fermeture portant des pistes avec lesquelles coopèrent au moins un contact actionnable par une manette de commande.

La plupart des véhicules étant équipés d'un appareil audio, tel qu'un poste de radio par exemple, on a cherché, pour des raisons évidentes de sécurité, à placer au droit du volant de direction certaines commandes permettant d'accéder à au moins certaines fonctions de l'appareil audio.

A ce jour, les commandes de ces fonctions sont réalisées à l'aide d'un satellite ou d'une manette spécifique placés sous le volant, telle celle décrite dans le document FR-A-2 731 552, ou à partir de touches placées sur le volant lui-même.

Ces solutions sont onéreuses ; en effet, dans le cas du satellite ou de la manette spécifique, l'ordre de montage et de cablage est contraignant et les coquilles, qui comme on le sait coiffent sous le volant le haut de colonne de direction, doivent être adaptées ; dans le cas des touches sur le volant, ces fonctions passent par le contacteur tournant et rendent celui-ci plus compliqué.

En particulier, le document DE-C-197 22 780 décrit une manette de commutateur d'éclairage et signalisation ou d'essuie-vitre et lave-vitre, pour ensemble de commutation de haut de colonne de direction de véhicule automobile, comportant un corps et des moyens de commande d'éclairage et signalisation ou d'essuie-vitre et lave-vitre.

La présente invention a pour but d'éviter les inconvénients ci-dessus en mettant à profit l'une des manettes de commutateur déjà existantes, comme évoquées ci-dessus.

Ainsi, l'invention propose une manette de commutateur d'éclairage et signalisation ou d'essuie-vitre et lave-vitre conforme à la revendication 1.

Avantageusement, la platine est rectangulaire et montée par ses bords latéraux dans deux rainures axiales diamétralement opposées ménagées à l'intérieur d'une jupe cylindrique que présente le support central.

De préférence, le circuit conducteur est relié à l'appareil audio par l'intermédiaire d'un connecteur porté par le support central ; la jupe du support central est munie d'un fond portant un puits axial dans lequel le connecteur est monté par clipsage.

Avantageusement, le circuit conducteur comprend un circuit découpé noyé dans la platine, laquelle présente une ouverture, des languettes du circuit découpé faisant saillie par rapport à ladite ouverture pour coopération avec des pistes du connecteur ; les pistes du connecteur sont prolongées selon des broches par lesquelles le connecteur est relié électriquement à l'appareil audio.

Selon une forme de réalisation préférée, la platine est plus longue axialement que la jupe du support central et la partie de la platine qui émerge de la jupe est coiffée d'un chapeau assujetti au support central, en extrémité de celui-ci ; pour sa préhension, l'organe de commande est axialement en partie en saillie par rapport au chapeau à la faveur d'une ouverture que présente celui-ci.

Avantageusement, l'organe de commande est muni d'un curseur coopérant avec le circuit conducteur ou avec des pistes électriquement reliées au circuit conducteur ménagées à la surface de la platine.

En variante, l'organe de commande commande le déplacement d'un curseur coopérant avec le circuit conducteur ou avec des pistes électriquement reliées au circuit conducteur ménagées à la surface de la platine.

De préférence, l'organe de commande est un bouton basculant ; le bouton basculant est également monté à translation ; l'organe de commande est une molette montée à rotation.

Selon une variante de réalisation, l'organe de commande est la touche d'un levier de commande adapté à coopérer avec une lame de contact ; la lame de contact est en forme générale de U ayant un fond et deux bras latéraux, ledit fond s'étendant transversalement par rapport à la platine à laquelle il est solidarisé ; un pied issu d'une tranche du fond coopère élastiquement avec le circuit conducteur pour l'alimentation électrique de la lame de contact.

De préférence, le levier de commande est monté articulé sur la platine grâce à la coopération d'un pion avec un logement ; le pion est porté par la platine et le logement ménagé dans le levier de commande.

De préférence, le levier de commande est en forme générale de T ayant une tête et une jambe, laquelle jambe s'étend entre les bras latéraux de la lame de contact et est adaptée, par ses extrémités, à mettre l'un ou l'autre des bras latéraux en contact avec un plot de contact du circuit conducteur.

Avantageusement, le logement est de forme oblongue, en sorte que le levier de commande est déplaçable en translation, et un ressort porté par la platine applique le bord du logement contre le pion.

De préférence, le levier de commande porte un téton adapté à mettre un bras transversal, issu du fond de la lame de contact, au contact d'un plot de contact du circuit conducteur.

Avantageusement, le ressort est un ressort à lame monté transversalement de manière arc-boutée, ses extrémités étant disposées dans des fentes en forme de V se faisant face et ménagées dans des bossages de la platine.

De préférence, le ressort à lame présente dans sa partie centrale un pliage définissant un V dont les ailes se rejoignent selon un fond semi-circulaire.

Avantageusement, la partie centrale du ressort à lame coopère avec le levier de commande qui présente, pour ce faire, une échancrure bordée symétriquement de chaque côté par des flancs inclinés.

De préférence, les flancs inclinés font entre eux un angle supérieur à celui que forment entre elles les ailes de la partie centrale du ressort à lame.

La présente invention a également pour objet un commutateur de haut de colonne de direction de véhicule automobile équipé d'une manette de commande telle que la manette ci-dessus.

Avantageusement, le commutateur est un commutateur d'essuie-vitre ; la jupe du support central est entourée d'une bague rotative pour la commande de l'essuie-vitre arrière et du lave-vitre arrière.

Pour mieux faire comprendre l'objet de l'invention, on va en décrire maintenant, à titre d'exemple, purement illustratif et non limitatif, un mode de réalisation représenté sur les dessins annexés.

Sur ces dessins :
- la figure 1 est une vue de face d'une manette selon l'invention ;
- la figure 2 est une vue de gauche par rapport à la figure 1 ;
- la figure 3 est une vue en coupe selon III-III de la figure 1 ;
- la figure 4 est une vue en coupe selon IV-IV de la figure 2 ;
- la figure 5 est une vue en perspective éclatée, à plus petite échelle, de la manette des figures 1 à 4 ;
- la figure 6 est une vue en perspective éclatée d'une variante de manette selon l'invention ;
- la figure 7 est une vue en plan de dessus de la platine, de la manette de la figure 6, équipée d'un levier de commande ;
- la figure 8 est une vue en coupe selon VIII-VIII de la figure 7 ;
- la figure 9 est une vue partielle analogue à la figure 7, le levier de commande ayant été basculé ;
- la figure 10 est une vue partielle analogue à la figure 7, le levier de commande ayant été poussé ;
- les figures 11 à 13 sont des vues partielles à plus grande échelle des figures 7, 9 et 10 respectivement.

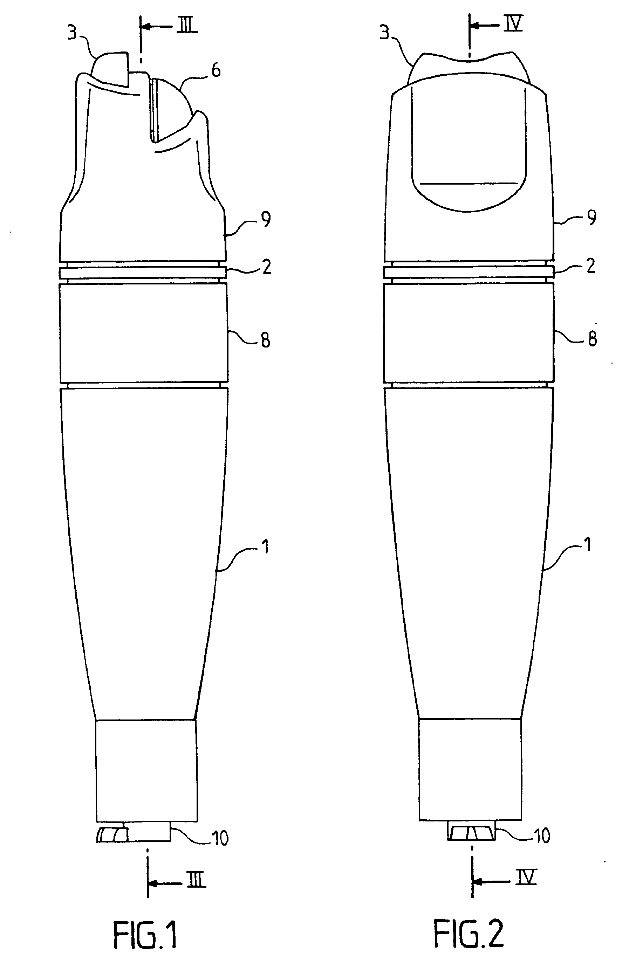

Les figures 1 à 5 représentent une manette de commande destinée à un commutateur d'essuie-vitre.

Un commutateur d'essuie-vitre comprend généralement un boîtier dans lequel des contacts sont actionnables par la manette de commande pour réaliser les différentes fonctions ; le commutateur est monté sur un bloc de support traversé par l'arbre de direction ; le boîtier du commutateur est monté à l'intérieur du bloc de support, seule la manette de commande du commutateur sortant du bloc par une fente qu'il présente.

La manette du commutateur d'essuie-vitre se compose extérieurement d'un corps de manette 1, rotatif dans un plan parallèle au volant et dans le plan que la manette définit avec la colonne de direction, dit plan de la colonne de direction, d'une bague rotative 8, d'un support central 2, d'un chapeau 9, d'un bouton basculant 3 et d'une molette 6, le bouton basculant 3 et la molette 6 étant en bout, à l'extrémité libre de la manette.

Dans le plan parallèle au volant, le corps 1 de manette possède une position neutre stable, une position instable par déplacement vers le bas et trois positions stables par déplacement vers le haut.

Le déplacement vers le bas correspond à la mise en fonction de l'essuie-vitre impulsionnel.

Les déplacements successifs vers le haut correspondent respectivement à la mise en fonction de l'essuie-vitre intermittent, petite vitesse, grande vitesse.

Dans le plan de la colonne de direction, le corps 1 du commutateur possède une position neutre stable et une position instable. Le maintien du commutateur en position instable fait fonctionner le lave-vitre avant.

La bague 8 possède deux positions stables et une position instable. Une position stable est la position neutre, et la deuxième position stable est celle de fonctionnement de l'essuie-vitre arrière. Au delà de cette deuxième position stable, la position instable correspond à la mise en fonctionnement du lave vitre-arrière.

Ces fonctions sont bien connues ainsi que les moyens qui permettent de les obtenir ; aussi, ceux-ci ne seront pas décrits davantage ; seuls ont été représentés la tige de commande 10 et l'actionneur rotatif 11 associé à la bague 8 ; autrement dit, la partie de la manette qui s'étend depuis la bague 8 jusqu'au boîtier du commutateur est analogue à celle des manettes connues et la manette selon l'invention diffère de celles-ci par sa partie qui s'étend vers son extrémité libre, au delà de la bague 8.

Selon l'invention, cette partie d'extrémité libre comporte au moins un organe de commande d'au moins l'une des fonctions assurées par un appareil audio embarqué dans un véhicule, tel qu'un poste de radio, un lecteur de cassettes ou de CD.

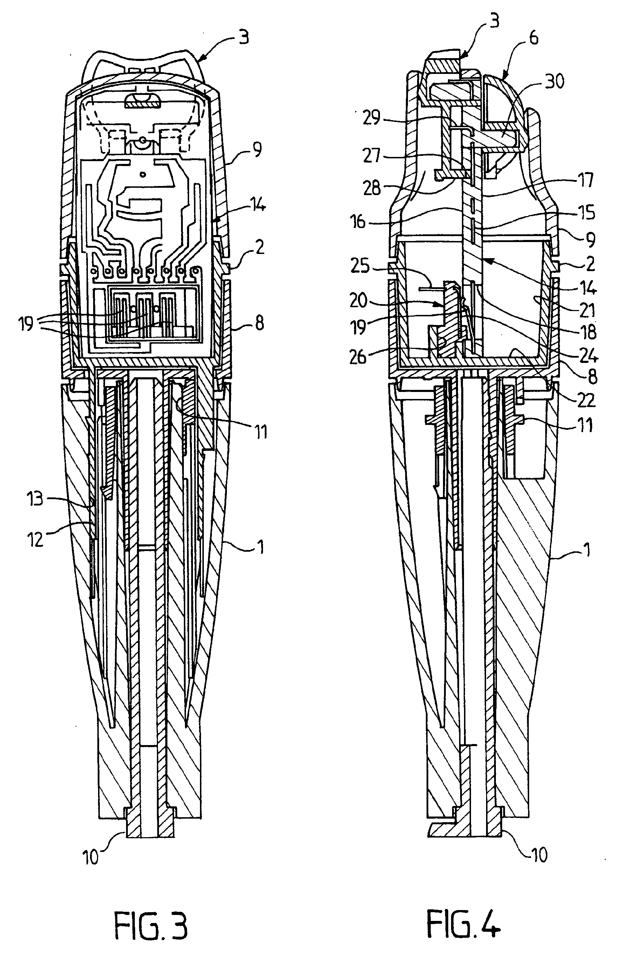

Le support central 2, entouré par la bague 8, est emmanché dans le corps 1 dont il est solidaire, grâce à au moins une languette axiale 12 qu'il présente, figure 3, et qui coopère par clipsage avec la paroi intérieure 13 du corps 1.

Le support central 2 comprend une jupe 21 cylindrique et un fond 22 ; la jupe 21 est donc ouverte vers l'extrémité libre de la manette.

La jupe 21 porte intérieurement deux rainures axiales 23 diamétralement opposées dans lesquelles est montée, par ses bords latéraux, une platine 14 de forme générale rectangulaire.

La platine 14 mise en place est en butée axiale contre le fond 22 du support central ; elle est plus longue axialement que la jupe 21 et sa partie qui émerge du support central 2 est coiffée par le chapeau 9 assujetti au support central 2, en extrémité de celui-ci, par exemple par clipsage.

La platine 14 est globalement en matériau non conducteur et comprend un circuit conducteur 15 découpé noyé dans le matériau non conducteur et les faces externes 16, 17 de la platine 14 ont reçu des pistes conductrices, liées électriquement au circuit conducteur 15.

La platine 14 présente une ouverture 18 dans sa partie proche du fond 22 du support central 2 ; à la faveur de cette ouverture 18, le circuit conducteur 15 présente des languettes 19, ici trois languettes 19, dont l'extrémité libre fait saillie par rapport à l'ouverture 18. Ces languettes 19 coopèrent avec des pistes 24 d'un connecteur 20 prolongées selon des broches 25 auxquelles sont raccordés des conducteurs de liaison reliant électriquement la platine 14 à l'appareil audio.

Le connecteur 20 est monté par clipsage dans un puits 26 axial porté par le fond 22 du support central 2.

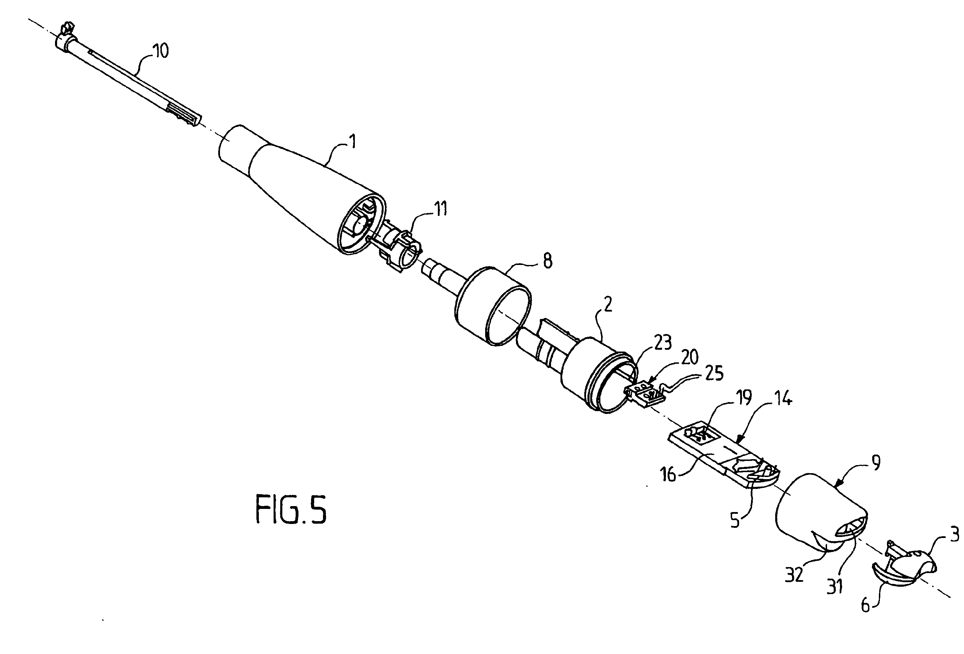

Vers l'extrémité libre de la manette, la platine 14 présente d'un côté, ici du côté de sa face 16, un logement 27 et de l'autre côté un pivot 30 ; le logement 27 reçoit l'axe 28 du bouton basculant 3 autour duquel il peut basculer d'un côté ou de l'autre ; une lame-ressort 5, figure 5, permet au bouton basculant de rester au repos dans sa position médiane ; le pivot 30 permet le montage à rotation de la molette 6.

Le bouton basculant 3 porte sur sa face tournée vers la platine 14 un curseur, non représenté, qui coopère avec des doigts, tels que le doigt 29, figure 4, issus du circuit conducteur 15. De manière analogue, la molette 6 et la platine 14 comprennent des moyens électriques complémentaires non représentés permettant à la molette 6, en tournant autour du pivot 30, d'intervenir sur le circuit conducteur 15.

Que ce soit pour le bouton basculant 3 ou pour la molette 6, des moyens électriques complémentaires pourraient être des curseurs, actionnés mécaniquement par l'intermédiaire du bouton basculant 3 ou de la molette 6, coopérant avec des pistes conductrices ménagées sur les faces 16 et 17 de la platine 14.

Le bouton basculant 3 et la molette 6 sont axialement en partie en saillie par rapport au chapeau 9, pour leur préhension, à la faveur d'ouvertures 31, 32 que présente le chapeau 9.

Ainsi, en bout de manette, il est possible, grâce au bouton basculant 3 et à la molette 6, d'intervenir sur l'appareil audio sans lâcher le volant de direction.

A titre d'exemple, si l'appareil audio est un poste de radio, le bouton basculant 3 pourrait, par une commande du type à impulsions, commander, pour un sens du basculement, l'augmentation du volume et, pour l'autre sens, la diminution de celui-ci.

Dans cette application à un poste de radio, la molette 6 pourrait permettre, par rotation, d'avoir accès à des stations pré-réglées.

Bien entendu, même dans cette application à un poste de radio, d'autres fonctions peuvent être commandées, notamment par le bouton basculant 3, telles que balance, fader, tremble, bass.... ; d'une façon générale, il peut s'agir de toute fonction à régler préalablement sélectionnée sur l'appareil audio lui-même.

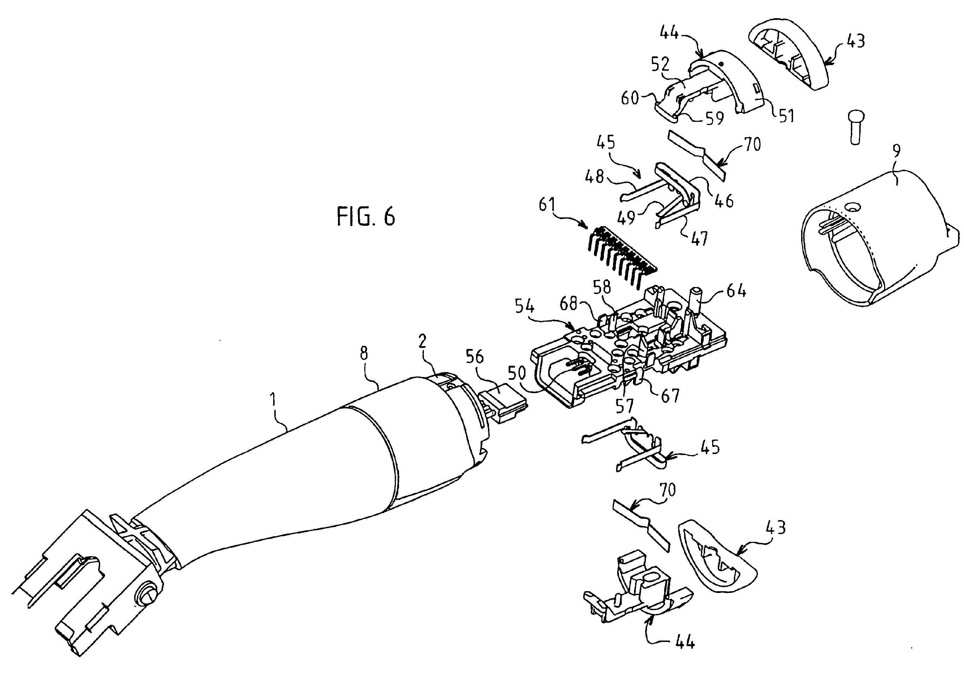

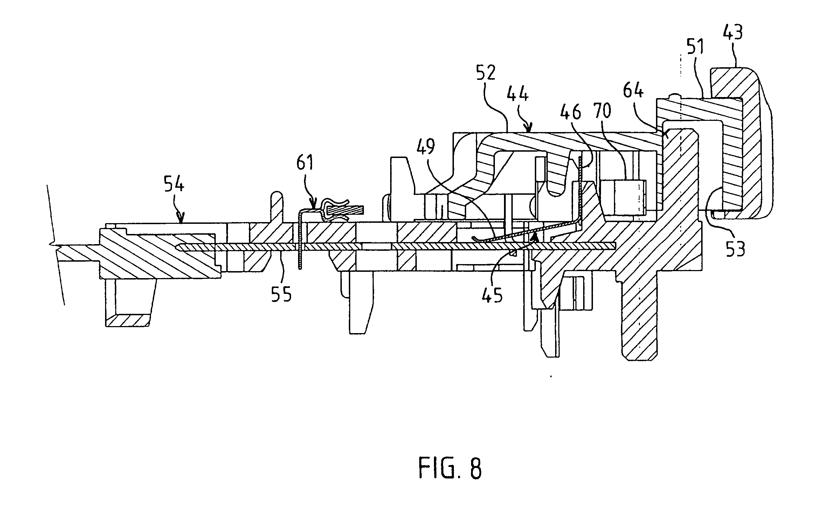

Selon la variante des figures 6 à 10, la platine 54 est également globalement en matériau non conducteur et comprend un circuit conducteur 55 découpé noyé dans le matériau non conducteur ; ici, le circuit conducteur 55 intègre des éléments de connexion 50 assurant la liaison électrique de la platine 54 via un connecteur 56.

Sur l'une de ses faces, la platine 54 reçoit un levier de commande 44, associé à une touche de commande 43 clipsée sur le levier 44 en bout de celui-ci ; bien entendu, le levier 44 et la touche 43 pourraient être d'une seule pièce.

Le levier 44 est adapté à coopérer avec une lame dite de contact 45 par l'intermédiaire de laquelle sont assurées les fonctions électriques.

La lame de contact 45 est en forme générale de U ayant un fond 46 et deux ailes ou bras latéraux 47, 48 ; le fond 46 s'étend dans un plan globalement perpendiculaire à la platine 54 par rapport à laquelle il est disposé transversalement.

Sur sa tranche tournée vers la platine 54, le fond 46 de la lame de contact 45 présente une découpe à griffes destinées à prendre place dans des logements appropriés en vue de la fixation du fond 46 sur la platine 54.

Issu de cette tranche qui est tournée vers la platine 54, un pied 49 en appui élastique sur une plage découverte du circuit conducteur 55 assure l'alimentation électrique de la lame de contact 45.

Le levier de commande 44 est en forme générale de T ayant une tête 51 et une jambe 52 ; le levier de commande 44 est monté articulé sur la platine 54 ; ici, ce montage à articulation est obtenu par coopération d'un pion 64 de la platine 54 avec un logement 53 ménagé dans le levier de commande 44 ; dans la forme représentée, le logement 53 est ménagé dans la tête 51 du levier de commande 44 et est de forme oblongue, pour des raisons décrites ci-dessous.

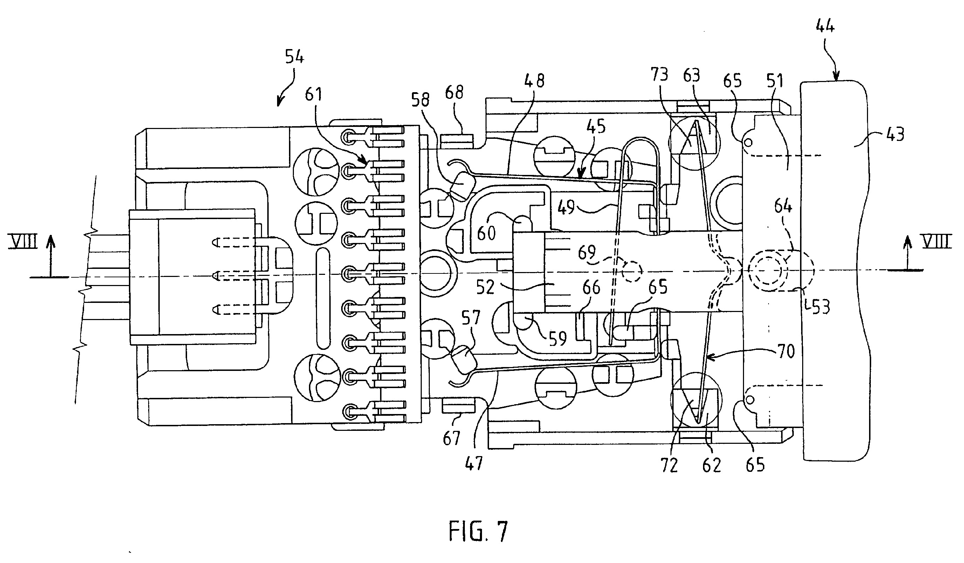

Lorsque le levier de commande 44 et la lame de contact 45 sont montés sur la platine 54, la jambe 52 du levier de commande 44 s'étend entre les bras latéraux 47 et 48 de la lame de contact 45, pratiquement parallèlement à ceux-ci ; dans cette position, de repos, les faces en regard des extrémités des bras 47, 48 reposent sur des appuis 57, 58 portés par la platine 54, figure 7.

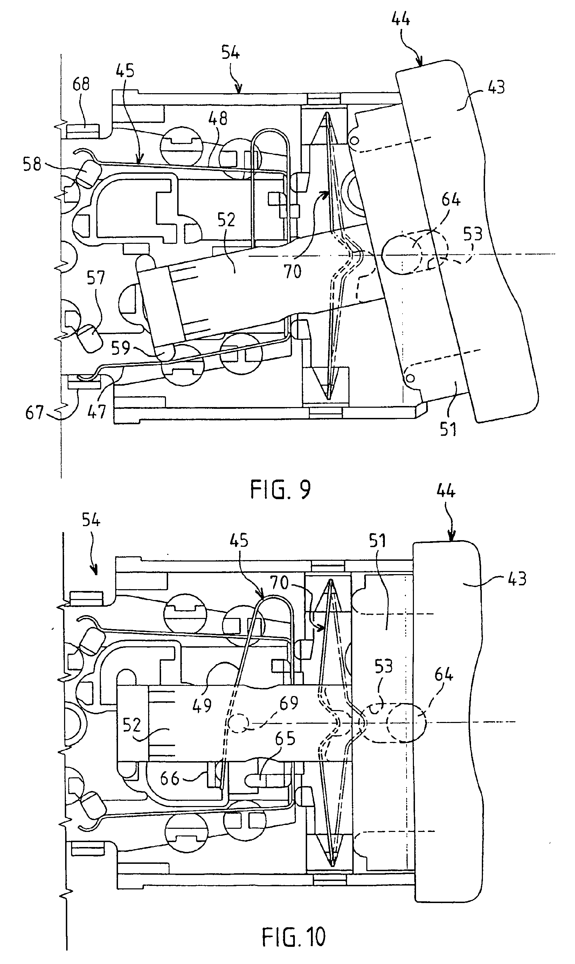

En bout de la jambe 52 du levier de commande 44 sont prévus latéralement, de part et d'autre de celle-ci, deux talons 59, 60 respectivement ; en faisant basculer le levier de commande 44 autour du pion 64, par action sur la touche 43, par exemple dans le sens contraire des aiguilles d'une montre, le talon 59 de la jambe 52 du levier de commande 44 agit sur le bras latéral 47 de la lame de contact 45 en sorte que ce bras latéral 47 quitte l'appui 57 pour venir au contact, figure 9, d'un plot 67 dit de contact, du circuit conducteur 55, associé à une résistance d'un réseau résistif 61 pour codage de la fonction correspondante.

Bien entendu, une action dans l'autre sens de basculement sur la touche 43 conduit le talon 60 de la jambe 52 du levier de commande 44 à agir sur le bras latéral 48 qui quitte l'appui 58 pour venir au contact d'un plot de contact 68 et assurer une autre fonction également codée.

Avantageusement, le mouvement de basculement du levier de commande 44 est limité par des bossages 62, 63 de limitation de course avec lesquels sont adaptées à coopérer des portées latérales 65, 66 ménagées sur la tête 51 du levier de commande 44.

Le pion 64 étant monté dans un logement 53 de forme oblongue, la tête 51 du levier de commande 44 est sollicitée, vers l'extérieur de la platine 54, par un ressort à lame 70, en sorte qu'une rotation autour du pion 64 puisse être assurée.

La forme oblongue du logement 53 s'étend selon l'axe de la jambe 52 du levier de commande 44 : grâce à cette disposition, il est possible de déplacer le levier de commande 44 en translation en poussant la touche 43, contre l'action du ressort à lame 70, et d'assurer une troisième fonction.

Pour ce faire, la lame de contact 45 présente un bras transversal 49, issu latéralement de son fond 46, qui repose, par son extrémité, sur un appui 65 porté par la platine 54, figure 7.

Le levier de commande 44 est adapté à coopérer avec ce bras transversal 49 grâce à un téton 69 que porte sa jambe 52 ; en poussant axialement la touche 43, figure 10, le téton 69 agit sur le bras transversal 49 en sorte que celui-ci quitte l'appui 65 pour venir au contact d'un plot de contact 66 également associé à une résistance du réseau résistif 61 pour codage de la fonction correspondante ; la course en poussée du levier de commande 44 est limitée par le logement 53 de forme oblongue.

Ainsi, en poussant sur la touche 43, par exemple, le volume de la radio pourrait être coupé, puis remis en appuyant à nouveau.

Le dimensionnement des pièces concernées est tel qu'il est impossible de réaliser deux contacts électriques simultanément ; par exemple, si l'on pousse la touche 43 alors que le levier de commande 44 est en position de basculement, le talon 59 ou 60 concerné quitte le bras latéral 47 ou 48 avant que le téton 69 vienne pousser le bras transversal 49.

Le ressort à lame 70 est monté transversalement de manière arc-boutée, ses extrémités étant disposées dans des fentes 72, 73 en forme de V se faisant face et ménagées respectivement dans les bossages 62, 63 de la platine 54.

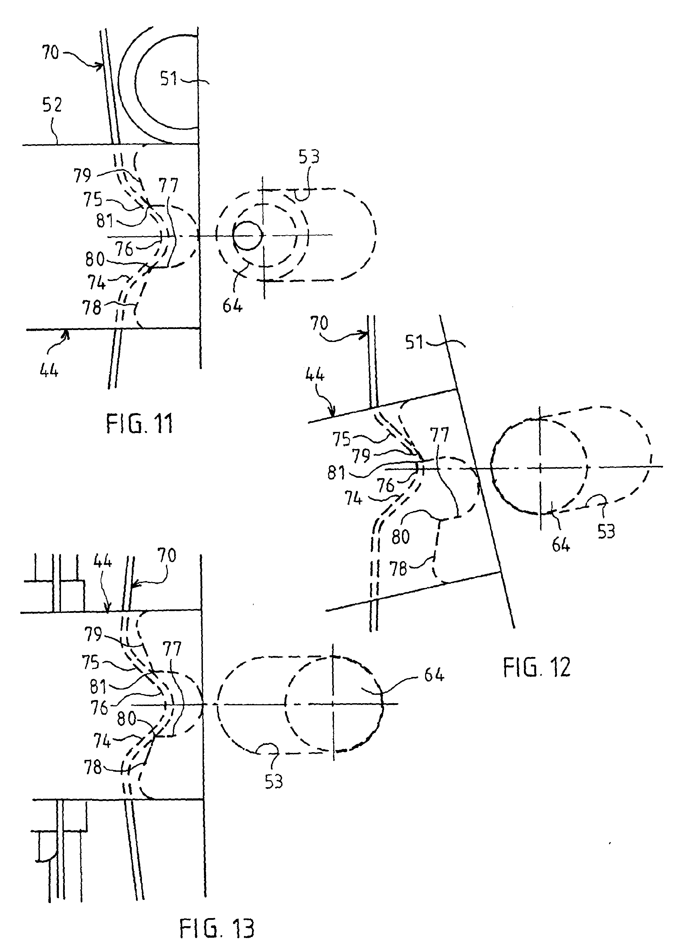

Pour donner une sensation de cloquage à la commande, lors de la manoeuvre de la touche 43, le ressort à lame 70 présente dans sa partie centrale un pliage définissant un V, figure 11, dont les ailes 74, 75 se rejoignent selon un fond 76 semi-circulaire.

C'est par cette partie centrale 74-75-76 en forme de V que le ressort à lame 70 coopère avec le levier de commande 44.

Plus précisément, sur le levier de commande 44, ici sur sa jambe 52, est ménagée une échancrure 77 bordée symétriquement de chaque côté par des flancs inclinés 78, 79 ; les flancs 78, 79 font entre eux un angle qui est supérieur à celui que forment entre elles les ailes 74, 75 de la partie centrale du ressort à lame 70 en sorte que celles-ci coopèrent avec les arêtes 80, 81 d'intersection des flancs 78, 79 et de l'échancrure 77.

Dans la position de repos, figures 7 et 11, le ressort à lame 70 et le levier de commande 44 sont centrés l'un par rapport à l'autre, la partie centrale 74-75-76 du ressort à lame 70 et l'échancrure 77 du levier de commande 44 ayant un même axe qui, ici, est l'axe longitudinal de la platine 54.

Lors d'une action sur la touche 43 conduisant au basculement du levier de commande 44, l'arête 80, ou 81, du levier glisse le long de l'aile correspondante 74 ou 75 en comprimant en quelque sorte le ressort à lame 70, l'effort de commande croissant dès lors progressivement ; lorsque l'arête 80, ou 81, atteint la partie externe correspondant au fond semi-circulaire 76, l'effort diminue jusqu'en fin de manoeuvre, figures 9 et 12 : on obtient ainsi l'effet de cloquage souhaité.

Lorsqu'une poussée est réalisée sur la touche 43, celle-ci se déplace parallèlement à elle-même, les deux arêtes 80, 81 étant centrées sur les ailes 74, 75 du ressort à lame 70 ; celui-ci se comprime et augmente l'effort de manoeuvre progressivement, la partie centrale 74-75-76 se déformant lors de cette compression ; après passage du plan passant par les extrémités du ressort à lame 70, celui-ci se détend en cloquant lui-même.

Comme cela est visible sur la figure 6, la platine 54 est adaptée à recevoir sur sa face opposée un autre levier de commande 44 et sa touche de commande 43 associés à une autre lame de contact 45 et un autre ressort à lame 70, de façon à assurer trois autres fonctions électriques.

## Revendications

1. Manette de commutateur d'éclairage et signalisation ou d'essuie-vitre et lave-vitre, pour ensemble de commutation de haut de colonne de direction de véhicule automobile, comportant un corps (1) et des moyens de commande (8, 10, 11) d'éclairage et signalisation ou d'essuie-vitre et lave-vitre, **caractérisée par le fait qu'**elle comporte, dans la partie s'étendant vers son extrémité dite libre, au-delà desdits moyens de commande (8, 10, 11), au moins un organe de commande (3, 6, 43) d'au moins l'une des fonctions assurées par un appareil audio embarqué, une platine (14, 54) qui comprend un circuit conducteur (15, 55) avec lequel l'organe de commande (3, 6, 43) est adapté à coopérer, et un support central (2) assujetti audit corps (1) et supportant la platine (14, 54), l'organe de commande (3, 6, 43) étant porté en bout de la manette par la platine (14, 54).

2. Manette de commutateur selon la revendication 1, **caractérisée par le fait que** la platine (14, 54) est rectangulaire et montée par ses bords latéraux dans deux rainures axiales (23) diamétralement opposées ménagées à l'intérieur d'une jupe (21) cylindrique que présente le support central (2).

3. Manette de commutateur selon l'une des revendications 1 ou 2, **caractérisée par le fait que** le circuit conducteur (15, 55) est relié à l'appareil audio par l'intermédiaire d'un connecteur (20, 56) porté par le support central (2).

4. Manette de commutateur selon les revendications 2 et 3 prises conjointement, **caractérisée par le fait que** la jupe (21) du support central (2) est munie d'un fond (22) portant un puits (26) axial dans lequel le connecteur (20) est monté par clipsage.

5. Manette de commutateur selon l'une des revendications 3 ou 4, **caractérisée par le fait que** le circuit conducteur (15) comprend un circuit découpé noyé dans la platine (14), laquelle présente une ouverture (18), des languettes (19) du circuit découpé faisant saillie par rapport à ladite ouverture (18) pour coopération avec des pistes (24) du connecteur (20).

6. Manette de commutateur selon la revendication 5, **caractérisée par le fait que** les pistes (24) du connecteur (20) sont prolongées selon des broches (25) par lesquelles le connecteur (20) est relié électriquement à l'appareil audio.

7. Manette de commutateur selon l'une des revendications 3 à 6 prises dans la dépendance de la revendication 2, **caractérisée par le fait que** la platine (14, 54) est plus longue axialement que la jupe (21) du support central (2) et la partie de la platine (14, 54) qui émerge de la jupe (21) est coiffée d'un chapeau (9) assujetti au support central (2), en extrémité de celui-ci.

8. Manette de commutateur selon la revendication 7, **caractérisée par le fait que**, pour sa préhension, l'organe de commande (3, 6, 43) est axialement en partie en saillie par rapport au chapeau (9) à la faveur d'une ouverture (31,32) que présente celui-ci.

9. Manette de commutateur selon l'une des revendications 1 à 8, **caractérisée par le fait que** l'organe de commande (3,6) est muni d'un curseur coopérant avec le circuit conducteur (15) ou avec des pistes électriquement reliées au circuit conducteur (15) ménagées à la surface de la platine (14).

10. Manette de commutateur selon l'une des revendications 1 à 8, **caractérisée par le fait que** l'organe de commande (3, 6) commande le déplacement d'un curseur coopérant avec le circuit conducteur (15) ou avec des pistes électriquement reliées au circuit conducteur (15) ménagées à la surface de la platine (14).

11. Manette de commutateur selon l'une des revendications 1 à 10, **caractérisée par le fait que** l'organe de commande (3, 43) est un bouton basculant.

12. Manette de commutateur selon la revendication 11, **caractérisée par le fait que** le bouton basculant (43) est également monté à translation.

13. Manette de commutateur selon l'une des revendications 1 à 10, **caractérisée par le fait que** l'organe de commande (6) est une molette montée à rotation.

14. Manette de commutateur selon l'une des revendications 11 ou 12, **caractérisée par le fait que** l'organe de commande (43) est la touche d'un levier de commande (44) adapté à coopérer avec une lame de contact (45).

15. Manette de commutateur selon la revendication 14, **caractérisée par le fait que** la lame de contact (45) est en forme générale de U ayant un fond (46) et deux bras latéraux (47, 48), ledit fond (46) s'étendant transversalement par rapport à la platine (54) à laquelle il est solidarisé.

16. Manette de commutateur selon la revendication 15, **caractérisée par le fait qu'**un pied (49) issu d'une tranche du fond (46) coopère élastiquement avec le circuit conducteur (55) pour l'alimentation électrique de la lame de contact (45).

17. Manette de commutateur selon l'une des revendications 14 à 16, **caractérisée par le fait que** le levier de commande (44) est monté articulé sur la platine (54) grâce à la coopération d'un pion (64) avec un logement (53).

18. Manette de commutateur selon la revendication 17, **caractérisée par le fait que** le pion (64) est porté par la platine (54) et le logement (53) ménagé dans le levier de commande (44).

19. Manette de commutateur selon l'une des revendications 17 ou 18, **caractérisée par le fait que** le logement (53) est de forme oblongue, en sorte que le levier de commande (44) est déplaçable en translation, et un ressort (70) porté par la platine (54) applique le bord du logement (53) contre le pion (64).

20. Manette de commutateur selon l'une des revendications 15 à 19, **caractérisée par le fait que** le levier de commande (44) est en forme générale de T ayant une tête (51) et une jambe (52), laquelle jambe (52) s'étend entre les bras latéraux (47, 48) de la lame de contact (45) et est adaptée, par ses extrémités (59, 60), à mettre l'un ou l'autre des bras latéraux (47, 48) en contact avec un plot de contact (67, 68) du circuit conducteur (55).

21. Manette de commutateur selon la revendication 20, **caractérisée par le fait que** le levier de commande (44) porte un téton (69) adapté à mettre un bras transversal (49), issu du fond (46) de la lame de contact (45), au contact d'un plot de contact (66) du circuit conducteur (55).

22. Manette de commutateur selon l'une des revendications 20 ou 21, **caractérisée par le fait que** le ressort (70) est un ressort à lame monté transversalement de manière arc-boutée, ses extrémités étant disposées dans des fentes (72, 73) en forme de V se faisant face et ménagées dans des bossages (62, 63) de la platine (54).

23. Manette de commutateur selon la revendication 22, **caractérisée par le fait que** le ressort à lame (70) présente dans sa partie centrale un pliage définissant' un V dont les ailes (74, 75) se rejoignent selon un fond (76) semi-circulaire.

24. Manette de commutateur selon la revendication 23, **caractérisée par le fait que** la partie centrale (74, 75, 76) du ressort à lame (70) coopère avec le levier de commande (44) qui présente, pour ce faire, une échancrure (77) bordée symétriquement de chaque côté par des flancs inclinés (78, 79).

25. Manette de commutateur selon la revendication 24, **caractérisée par le fait que** les flancs inclinés (78, 79) font entre eux un angle supérieur à celui que forment entre elles les ailes (74, 75) de la partie centrale du ressort à lame (70).

26. Commutateur de haut de colonne de direction de véhicule automobile équipé d'une manette de commande, **caractérisé par le fait que** la manette de commande est selon l'une des revendications 1 à 25, lesdits moyens de commandes (8, 10, 11) étant reliés audit commutateur selon un agencement apte à actionner l'éclairage et la signalisation ou l'essuie-vitre et le lave-vitre, et ledit organe de commande (3, 6, 43) étant relié audit appareil audio embarqué.

27. Commutateur selon la revendication 26, **caractérisé par le fait que** c'est un commutateur d'essuie-vitre.

28. Commutateur selon la revendication 27, dans lequel la manette de commutateur est selon l'une des revendications 3 à 25 prises dans la dépendance de la revendication 2, **caractérisé par le fait que** la jupe (21) du support central (2) est entourée d'une bague rotative (8) pour la commande de l'essuie-vitre arrière et du lave-vitre arrière.

## Claims

1. Lighting and turn indicator or screenwiper and screenwasher switch stalk for a switching assembly at the top of the steering column of an automobile vehicle, including a body (1) and lighting and turn indicator or screenwiper and screenwasher control means (8, 10, 11), **characterized in that** it includes, in the part extending toward what is called its free end, beyond said control means (8, 10, 11), at least one control member (3, 6, 43) of at least one of the functions of onboard audio equipment, a board (14, 54) that comprises a conductive circuit (15, 55) with which the control member (3, 6, 43) is adapted to cooperate, and a central support (2) attached to said body (1) and supporting the board (14, 54), the control member (3, 6, 43) being carried at the end of the stalk by the board (14, 54).

2. Switch stalk according to claim 1, **characterised in that** the board (14, 54) is rectangular and is mounted with its lateral edges in two diametrically opposite axial grooves (23) inside a cylindrical skirt (21) that is part of the central support (2).

3. Switch stalk according to either of claims 1 or 2, **characterised in that** the conductive circuit (15, 55) is connected to the audio equipment via a connector (20, 56) carried by the central support (2).

4. Switch stalk according to claims 2 and 3 taken conjointly, **characterised in that** the skirt (21) of the central support (2) has a bottom (22) carrying an axial well (26) into which the connector (20) is mounted and clipped.

5. Switch stalk according to either of claims 3 or 4, **characterised in that** the conductive circuit (15) comprises a cut-out circuit buried in the board (14), which has an opening (18), tongues (19) of the cut-out circuit projecting relative to said opening (18) to cooperate with tracks (24) of the connector (20).

6. Switch stalk according to claim 5, **characterised in that** the tracks (24) of the connector (20) are extended by pins (25) by which the connector (20) is electrically connected to the audio equipment.

7. Switch stalk according to any of claims 3 to 6 when dependent on claim 2, **characterised in that** the board (14, 54) is longer in the axial direction than the skirt (21) of the central support (2) and the part of the board (14, 54) that emerges from the skirt (21) is capped by a cap (9) attached to the central support (2) at the end thereof.

8. Switch stalk according to claim 7, **characterised in that**, for holding it, the control member (3, 6, 43) partly projects axially relative to the cap (9) by means of an opening (31, 32) thereon.

9. Switch stalk according to any of claims 1 to 8, **characterised in that** the control member (3, 6) has a cursor cooperating with the conductive circuit (15) or with tracks electrically connected to the conductive circuit (15) provided on the surface of the board (14).

10. Switch stalk according to any of claims 1 to 8, **characterised in that** the control member (3, 6) controls the movement of a cursor cooperating with the conductive circuit (15) or with tracks electrically connected to the conductive circuit (15) provided on the surface of the board (14).

11. Switch stalk according to any of claims 1 to 10, **characterised in that** the control member (3, 43) is a rocker button.

12. Switch stalk according to claim 11, **characterised in that** the rocker button (43) is also mounted to move in translation.

13. Switch stalk according to any of claims 1 to 10, **characterised in that** the control member (6) is a rotatably mounted thumbwheel.

14. Switch stalk according to either of claims 11 or 12, **characterised in that** the control member (43) is the button of a control lever (44) adapted to cooperate with a contact blade (45).

15. Switch stalk according to claim 14, **characterised in that** the contact blade (45) is generally U-shaped having a bottom (46) and two lateral arms (47, 48), said bottom (46) extending transversely relative to the board (54) to which it is fastened.

16. Switch stalk according to claim 15, **characterised in that** a foot (49) extending from an edge of the bottom (46) cooperates elastically with the conductor circuit (55) to supply electrical power to the contact blade (45).

17. Switch stalk according to any of claims 14 to 16, **characterised in that** the control lever (44) is articulated to the board (54) thanks to the cooperation of a peg (64) with a housing (53).

18. Switch stalk according to claim 17, **characterised in that** the pin (64) is carried by the board (54) and the housing (53) is provided in the control lever (44).

19. Switch stalk according to either of claims 17 or 18, **characterised in that** the housing (53) is of oblong shape so that the control lever (44) is mobile in translation and a spring (70) carried by the board (54) presses the edge of the housing (53) against the pin (64).

20. Switch stalk according to any of claims 15 to 19, **characterised in that** the control lever (44) is generally T-shaped having a head (51) and a stem (52), which stem (52) extends between the lateral arms (47, 48) of the contact blade (45) and is adapted, by means of its ends (59, 60), to bring one or the other of the lateral arms (47, 48) into contact with a contact stud (67, 68) of the conductive circuit (55).

21. Switch stalk according to claim 20, **characterised in that** the control lever (44) carries a nipple (69) adapted to bring a transverse arm (49) stemming from the bottom (46) of the contact blade (45) into contact with a contact stud (66) of the conductive circuit (55).

22. Switch stalk according to either of claims 20 or 21, **characterised in that** the spring (70) is a leaf spring mounted transversely cantilever-fashion, its ends being disposed in V-shaped slots (72, 73) facing each other and provided in bosses (62, 63) on the board (54).

23. Switch lever according to claim 22, **characterised in that** the leaf spring (70) has in its central part a bend defining a V the wings (74, 75) of which are joined together by a semicircular bottom (76).

24. Switch stalk according to claim 23, **characterised in that** the central part (74, 75, 76) of the leaf spring (70) cooperates with the control lever (44) which has, for this purpose, a notch (77) bordered symmetrically on each side by inclined flanks (78, 79).

25. Switch stalk according to claim 24, **characterised in that** the inclined flanks (78, 79) define between them an angle greater than that defined between the wings (74, 75) of the central part of the leaf spring (70).

26. Switch adapted to be mounted at the top of steering column of automobile vehicle equipped with a control stalk, **characterised in that** the control stalk is a switch stalk according to any of claims 1 to 25, said control means (8, 10, 11) being connected to said switch by an arrangement adapted to actuate the lighting and the turn indicators or the screenwiper and the screenwasher, and said control member (3, 6, 43) being connected to said onboard audio equipment.

27. Switch according to claim 26, **characterised in that** it is a screenwiper switch.

28. Switch according to claim 27, wherein the switch stalk is a switch stalk according to any of claims 3 to 25 when dependent on claim 2, **characterised in that** the skirt (21) of the central support (2) is surrounded by a rotary ring (8) for controlling the rear screenwiper and the rear screenwasher.

## Patentansprüche

1. Funktionsschalterhebel für Licht und Blinker oder Scheibenwischer und Scheibenwaschanlage für eine am oberen Lenkstock befindliche Schalteinheit eines Kraftfahrzeugs, mit einem Hauptteil (1) und Betätigungseinrichtungen (8, 10, 11) für Licht und Blinker oder Scheibenwischer und Scheibenwaschanlage, **dadurch gekennzeichnet, dass** er in dem Teil, der sich zu seinem sogenannten freien Ende erstreckt, hinter den Betätigungseinrichtungen (8, 10, 11) mindestens ein Betätigungsglied (3, 6, 43) für mindestens eine der Funktionen, die durch ein Audiobordgerät sichergestellt werden, eine Platine (14, 54), die einen Leiterstromkreis (15, 55) aufweist, mit dem zusammenzuwirken das Betätigungsglied (3, 6, 43) ausgelegt ist, und einen zentralen Träger (2) umfasst, der am Hauptteil (1) befestigt ist und die Platine (14, 54) haltert, wobei das Betätigungsglied (3, 6, 43) am Ende des Hebels von der Platine (14, 54) getragen ist.

2. Funktionsschalterhebel nach Anspruch 1, **dadurch gekennzeichnet, dass** die Platine (14, 54) rechteckig und mit ihren Seitenrändern in zwei diametral entgegengesetzten axialen Auskehlungen (23) angebracht ist, die im Inneren eines zylindrischen Mantels (21) ausgebildet sind, den der zentrale Träger (2) aufweist.

3. Funktionsschalterhebel nach einem der Ansprüche 1 oder 2, **dadurch gekennzeichnet, dass** der Leiterstromkreis (15, 55) mittels eines vom zentralen Träger (2) getragenen Verbinders (20, 56) mit dem Audiogerät verbunden ist.

4. Funktionsschalterhebel nach den zusammengenommenen Ansprüchen 2 und 3, **dadurch gekennzeichnet, dass** der Mantel (21) des zentralen Trägers (2) mit einer Rückwand (22) versehen ist, die eine axiale Vertiefung (26) aufweist, in welcher der Verbinder (20) durch Einclipsen angebracht ist.

5. Funktionsschalterhebel nach einem der Ansprüche 3 oder 4, **dadurch gekennzeichnet, dass** der Leiterstromkreis (15) einen abgeteilten Kreis umfasst, der in der Platine (14) eingebettet ist, die eine Öffnung (18) aufweist, wobei Fahnen (19) des abgeteilten Kreises in Bezug auf die Öffnung (18) vorstehen, um mit den Bahnen (24) des Verbinders (20) zusammenzuwirken.

6. Funktionsschalterhebel nach Anspruch 5, **dadurch gekennzeichnet, dass** die Bahnen (24) des Verbinders (20) Stiften (25) entsprechend verlängert sind, mit denen der Verbinder (20) elektrisch an das Audiogerät angeschlossen ist.

7. Funktionsschalterhebel nach einem der Ansprüche 3 bis 6 in Abhängigkeit von Anspruch 2, **dadurch gekennzeichnet, dass** die Platine (14, 54) axial länger ist als der Mantel (21) des zentralen Trägers (2) und der Teil der Platine (14, 54), der aus dem Mantel (21) austritt, mit einer Kappe (9) abgedeckt ist, die am zentralen Träger (2) und zwar an dessen Ende befestigt ist.

8. Funktionsschalterhebel nach Anspruch 7, **dadurch gekennzeichnet, dass** das Betätigungsglied (3, 6, 43), um ergriffen werden zu können, in Bezug auf die Kappe (9) aufgrund einer Öffnung (31, 32), die diese aufweist, teilweise axial vorsteht.

9. Funktionsschalterhebel nach einem der Ansprüche 1 bis 8, **dadurch gekennzeichnet, dass** das Betätigungsglied (3, 6) mit einem Gleitkontakt versehen ist, der mit dem Leiterstromkreis (15) oder mit elektrisch an den Leiterstromkreis (15) angeschlossenen Bahnen zusammenwirkt, die auf der Oberfläche der Platine (14) ausgebildet sind.

10. Funktionsschalterhebel nach einem der Ansprüche 1 bis 8, **dadurch gekennzeichnet, dass** das Betätigungsglied (3, 6) die Verschiebung eines Gleitkontakts regelt, der mit dem Leiterstromkreis (15) oder mit elektrisch an den Leiterstromkreis (15) angeschlossenen Bahnen zusammenwirkt, die auf der Oberfläche der Platine (14) ausgebildet sind.

11. Funktionsschalterhebel nach einem der Ansprüche 1 bis 10, **dadurch gekennzeichnet, dass** das Betätigungsglied (3, 43) ein Wippschalter ist.

12. Funktionsschalterhebel nach Anspruch 11, **dadurch gekennzeichnet, dass** der Wippschalter (43) auch translationsbeweglich angebracht ist.

13. Funktionsschalterhebel nach einem der Ansprüche 1 bis 10, **dadurch gekennzeichnet, dass** das Betätigungsglied (6) ein drehbeweglich angebrachtes Rändelrad ist.

14. Funktionsschalterhebel nach einem der Ansprüche 11 oder 12, **dadurch gekennzeichnet, dass** das Betätigungsglied (43) die Taste eines Betätigungshebels (44) ist, der dazu ausgelegt ist, mit einer Kontaktzunge (45) zusammenzuwirken.

15. Funktionsschalterhebel nach Anspruch 14, **dadurch gekennzeichnet, dass** die Kontaktzunge (45) allgemein U-förmig mit einer Rückwand (46) und zwei Seitenarmen (47, 48) ist, wobei sich die Rückwand (46) in Bezug auf die Platine (54), mit der sie fest verbunden ist, quer erstreckt.

16. Funktionsschalterhebel nach Anspruch 15, **dadurch gekennzeichnet, dass** ein von einem Abschnitt der Rückwand (46) ausgehender Fuß (49) zur elektrischen Versorgung der Kontaktzunge (45) mit dem Leiterstromkreis (55) elastisch zusammenwirkt.

17. Funktionsschalterhebel nach einem der Ansprüche 14 bis 16, **dadurch gekennzeichnet, dass** der Betätigungshebel (44) aufgrund des Zusammenwirkens eines Zapfens (64) mit einer Aufnahme (53) an der Platine (54) angelenkt ist.

18. Funktionsschalterhebel nach Anspruch 17, **dadurch gekennzeichnet, dass** der Zapfen (64) von der Platine (54) und der Aufnahme (53) getragen ist, die im Betätigungshebel (44) ausgebildet ist.

19. Funktionsschalterhebel nach einem der Ansprüche 17 oder 18, **dadurch gekennzeichnet, dass** die Aufnahme (53) von länglicher Form ist, so dass der Betätigungshebel (44) translationsverschieblich ist, und eine von der Platine (54) getragene Feder (70) den Rand der Aufnahme (53) gegen den Zapfen (64) drückt.

20. Funktionsschalterhebel nach einem der Ansprüche 15 bis 19, **dadurch gekennzeichnet, dass** der Betätigungshebel (44) allgemein T-förmig mit einem Kopf (51) und einem Schenkel (52) ist, der sich zwischen den Seitenarmen (47, 48) der Kontaktzunge (45) erstreckt und dazu ausgelegt ist, durch seine Enden (59, 60) den einen oder den anderen der Seitenarme (47, 48) mit einem Kontaktstück (67, 68) des Leiterstromkreises (55) in Kontakt zu bringen.

21. Funktionsschalterhebel nach Anspruch 20, **dadurch gekennzeichnet, dass** der Betätigungshebel (44) einen Ansatz (69) trägt, der dazu ausgelegt ist, einen von der Rückwand (46) der Kontaktzunge (45) ausgehenden Querarm (49) mit einem Kontaktstück (66) des Leiterstromkreises (55) in Kontakt zu bringen.

22. Funktionsschalterhebel nach einem der Ansprüche 20 oder 21, **dadurch gekennzeichnet, dass** die Feder (70) eine quer angebrachte, abgestützte Blattfeder ist, wobei ihre Enden in V-förmigen Schlitzen (72, 73) angeordnet sind, die einander zugewandt und in Erhebungen (62, 63) der Platine (54) ausgebildet sind.

23. Funktionsschalterhebel nach Anspruch 22, **dadurch gekennzeichnet, dass** die Blattfeder (70) in ihrem mittleren Abschnitt eine Krümmung aufweist, die ein V bildet, dessen Schenkel (74, 75) entsprechend einer halbkreisförmigen Rückwand (76) zusammenlaufen.

24. Funktionsschalterhebel nach Anspruch 23, **dadurch gekennzeichnet, dass** der mittlere Abschnitt (74, 75, 76) der Blattfeder (70) mit dem Betätigungshebel (44) zusammenwirkt, der dazu eine Aussparung (77) aufweist, die auf jeder Seite von geneigten Flanken (78, 79) symmetrisch eingefasst ist.

25. Funktionsschalterhebel nach Anspruch 24, **dadurch gekennzeichnet, dass** die geneigten Flanken (78, 79) zwischen sich einen Winkel bilden, der größer ist als derjenige, den die Schenkel (74, 75) des mittleren Abschnitts der Blattfeder (70) zwischen sich bilden.

26. Funktionsschalter des oberen Lenkstocks von Kraftfahrzeugen, der mit einem Funktionsschalterhebel ausgestattet ist, **dadurch gekennzeichnet, dass** der Funktionsschalter gemäß einem der Ansprüche 1 bis 25 ausgeführt ist, wobei die Betätigungseinrichtungen (8, 10, 11) entsprechend einer Anordnung an den Schalter angeschlossen sind, die geeignet ist, das Licht und den Blinker oder den Scheibenwischer und die Scheibenwaschanlage zu betätigen, und das Betätigungsglied (3, 6, 43) an das Audiobordgerät angeschlossen ist.

27. Funktionsschalter nach Anspruch 26, **dadurch gekennzeichnet, dass** er ein Scheibenwischerschalter ist.

28. Funktionsschalter nach Anspruch 27, wobei der Funktionsschalter nach einem der Ansprüche 3 bis 25 in Abhängigkeit von Anspruch 2 ausgeführt ist, **dadurch gekennzeichnet, dass** der Mantel (21) des zentralen Trägers (2) von einem Drehring (8) für die Betätigung des hinteren Scheibenwischers und der hinteren Scheibenwaschanlage umschlossen ist.
